## Europäisches Patentamt

## European Patent Office

## Office européen des brevets

(11) Veröffentlichungsnummer: **0 333 914**

**A1**

(12) **EUROPÄISCHE PATENTANMELDUNG**

(21) Anmeldenummer: 88113535.4

(22) Anmeldetag: 20.08.88

(51) Int. Cl.⁴: **H01C 17/04 , B23D 79/12 , //H05B3/46**

(30) Priorität: 22.03.88 DE 3809484

(43) Veröffentlichungstag der Anmeldung:
27.09.89 Patentblatt 89/39

(84) Benannte Vertragsstaaten:
DE FR IT

(71) Anmelder: **VDO Adolf Schindling AG**
**Gräfstrasse 103**
**D-6000 Frankfurt/Main 90(DE)**

(72) Erfinder: **Stockhecke, Dieter**
**Hinterm Gradierwerk 24**
**D-4750 Unna(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Verfahren zum Bearbeiten eines rohrförmigen Wicklungsträgers für ein Widerstandselement und Vorrichtung zur Durchführung des Verfahrens.**

(57) Die Erfindung betrifft ein Verfahren zum Bearbeiten eines aus isolierendem Material, insbesondere Kunststoff bestehenden Außenmantels (2b) eines rohrförmigen Wicklungsträgers (2) für ein Widerstandselement, sowie eine Vorrichtung zur Durchführung des Verfahrens.

Um den dünnwandigen Außenmantel des Rohres (2) möglichst exakt bearbeiten zu können, wird vorgeschlagen, das Rohr in eine Spannvorrichtung (1) einzuspannen, anschließend durch eine Schneidvorrichtung (3) zu ziehen, um die Längsachse zu drehen und erneut durch die Schneidvorrichtung (3) zu ziehen. Die Vorrichtung zur Durchführung des erfindungsgemäßen Verfahrens ist gekennzeichnet durch diametral angeordnete Spannbacken (1) sowie diametral zueinander angeordnete und relativ zu den Spannbacken in Längsrichtung des Rohres verfahrbare Schneidbacken (3). Bevorzugt weisen die Schneidbacken zusätzlich Erhebungen und Vertiefungen (3c) auf, um eine entsprechende Profilierung des Rohraußenmantels (2b) zu erzeugen.

FIG. 1

## Verfahren zum Bearbeiten eines rohrförmigen Wicklungsträgers für ein Widerstandelement und Vorrichtung zur Durchführung des Verfahrens

Die Erfindung betrifft ein Verfahren zum Bearbeiten eines aus isolierendem Material, insbesondere Kunststoff bestehenden Außenmantels eines rohrförmigen Wickelungsträgers für ein Widerstandselement sowie eine Vorrichtung zur Durchführung des Verfahrens.

Derartige Widerstandselemente finden beispielsweise Verwendung bei der Kraftstoffvorratsmessung, der Wickelungsträger und das Widerstandselement können dabei unterschiedlichst gestaltet sein. So ist aus der GB 2 130 733 A ein drahtförmiges Widerstandselement bekannt, das auf den rohrförmigen Wicklungsträger aufgewickelt ist und im Zusammenwirken mit einem Schwimmerkörper für das Kraftstoffniveau im Tank eine Veränderung seines Widerstandes erfährt, dem eine entsprechende elektrische Größe zugeordnet werden kann. In Abhängigkeit von der geometrischen Form des Kraftstofftankes kann die Wicklung des Widerstandsdrahtes unterschiedliche Steigung aufweisen. Aus der Praxis ist ferner die Ausbildung des Widerstandselementes als Hitzdrahtwiderstandselement bekannt, das Meßprinzip benötigt keinen als Schleifer fungierenden Schwimmkörper und nutzt die Tatsache aus, daß ein stromdurchflossener Widerstand seine Leitfähigkeit ändert, wenn er zum Beispiel durch Eintauchen in eine Flüssigkeit einen Teil seiner Eigenerwärmung abgibt.

Die nachstehend geschilderte Erfindung betrifft allgemein Widerstandselemente, die auf einen Wicklungsträger aufzubringen sind. Bekannt ist es, den Außenmantel des Wicklungsträgers mit in dessen Längsrichtung verlaufenden Stegen zu versehen, wobei das Widerstandselement beim Aufwickeln plastisch in den aus dem isolierenden Material bestehenden Außenmantel des Wicklungsträgers eindringt. Aufgrund der Ausbildung des Wicklungsträgers mit Stegen liegt das Widerstandselement zwischen den Stegen nicht am Außenmantel des rohrförmigen Wickelungsträgers an, was insbesondere bei der Ausbildung des Widerstandselementes in Art eines Hitzdrahtwiderstandselementes von Vorteil ist, weil das Widerstandselement zwischen den Stegen vollständig von dem umgebenden Medium, d.h. dem im Kraftstofftank befindlichen Kraftstoff und dem darüber befindlichen Gas umschlossen werden kann.

In der Praxis hat es sich nun als äußerst problematisch erwiesen, den aus dem isolierenden Material bestehenden Außenmantel des Wicklungsträgers unter Berücksichtigung der erforderlichen Maßhaltigkeit mit den gewünschten Erhöhungen und Vertiefungen zu versehen. So ist die Forderung zu Stellen große Rohrlängen zu bearbeiten, ohne daß der Außenmantel, der oftmals nur eine Dicke von 1 bis 4/10 mm aufweist, unterschiedlich stark abgetragen oder gar teilweise freigelegt wird, so daß der in aller Regel metallische Innenbereich des rohrförmigen Wickelungsträgers freigelegt wird. Es wurde zwar in der Praxis versucht, den Außenmantel durch Räumen zu bearbeiten, da es sich bei einem derartigen Verfahren aber um einen exzentrischen Abtragvorgang handelt, konnte hierdurch die genannte Forderung nicht erfüllt werden.

Es ist Aufgabe vorliegender Erfindung, ein Verfahren zum Bearbeiten eines aus isolierendem Material, insbesondere Kunststoff bestehenden Außenmantels eines rohrförmigen Wickelungsträgers für ein Widerstandselement zu schaffen, das es ermöglicht, geringste Außenmantelstärken exakt zu bearbeiten.

Gelöst wird die Aufgabe dadurch, daß das Rohr in eine Spannvorrichtung eingespannt wird, anschließend durch eine Schneidvorrichtung gezogen wird, schließlich um die Längsachse gedreht und erneut durch die Schleifvorrichtung gezogen wird. Prinzipiell besteht dabei die Möglichkeit, das Rohr vor dem Drehen der Spannvorrichtung zu entnehmen und diese dann in ihre Ausgangsstellung zurückzuverfahren um anschließend das Rohr erneut einzuspannen. Grundsätzlich ist es nur erforderlich, daß die Schneidvorrichtung und die Spannvorrichtung geeignet sind, Relativbewegungen zueinander auszuführen, besonders maßhaltige Schneidergebnisse lassen sich jedoch erzielen, wenn die Schneidvorrichtung stationär angeordnet ist. Zwischen dem jeweiligen Ziehen des Rohres durch die Schneidvorrichtung sollte das Rohr um 90° gedreht werden, wodurch mittels der gleichen Schneidvorrichtung die doppelte Anzahl der Schneidvorgänge erzielbar ist.

Die Erfindung betrifft ferner eine Vorrichtung zur Durchführung des oben genannten Verfahrens. Sie ist dadurch gekennzeichnet, daß die Spannvorrichtung diametral zueinander angeordnete Spannbuchsen zur Aufnahme des Rohraußenmantels aufweist sowie die Schneidvorrichtung mit diametral zueinander und relativ zu den Spannbacken in Längsrichtung des Rahmens verfahrbaren Schneidbacken. Gerade die diametrale Anordnung der Schneidbacken gewährleistet eine exakte spanabhebende Bearbeitung des Außenmantels des Wicklungsträgers, da die von der jeweiligen Schneidbacke in den Außenmantel einwirkenden Schneidkräfte von der gegenüberliegenden Schneidbacke kompensiert werden. Eine Kompensation der Schneidkräfte ist aber eine optimale Voraussetzung für ein schwingungsfreies Schneiden mit ebenen Schneidoberflächen.

Vorteilhaft sind die Spannbacken bezüglich der Schneidbacken um 90° zu diesen gedreht angeordnet. Die Schneidbacken besitzen in Längsrichtung des eingespannten Rohres verlaufende Erhebungen und Vertiefungen, die eine Negativform zur ge wünschten Außengestalt des bearbeiteten Rohres darstellen.

Die Schneidbacken können hintereinander mehrere Schneiden mit in Schneidrichtung sich vermindernden Innenabmessungen aufweisen oder es können mehrere Schneidbacken vorgesehen sein, denen entsprechend jeweils eine Schneide zugeordnet ist.

Auch die Spannbacken können mit Hinterschneidungen zur Aufnahme der Erhebungen des Rohraußenteils versehen sein, eine derartige Ausbildung hat den Vorteil, daß die von der Schneidvorrichtung geschnittenen Bereiche des Außenmantels nach dem Drehen des Rohres von der Spannvorrichtung nicht beschädigt werden und darüber hinaus durch den formschlüssgen Eingriff der Erhebungen des Rohraußenmantels in die Hinterschneidungen der Spannbacken das Rohr definiert zwischen den Spannbacken festgelegt ist.

Um eine definierte Relativbewegung von Spann- und Schneidvorrichtung zu gewährleisten sollten diese in einer gemeinsamen Halterung gelagert sein.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen erfindungswesentlich sind.

In den Figuren ist eine Vorrichtung zur Durchführung des erfindungsgemäßen Verfahrens beispielsweise dargestellt, ohne auf diese Ausführungsform beschränkt zu sein. Es zeigt:

Figur 1 eine Ansicht der Vorrichtung in Längsrichtung des Rohres gesehen, wobei das Rohr bearbeitet ist und sich in nicht mehr eingespanntem Zustand befindet,

Figur 2 eine stark vereinfachte Darstellung der Spann-und Schneidvorrichtung zur Verdeutlichung deren Anordnung in Längsrichtung des Rohres gesehen und

Figur 3 eine Detaildarstellung eines Schneidbackens.

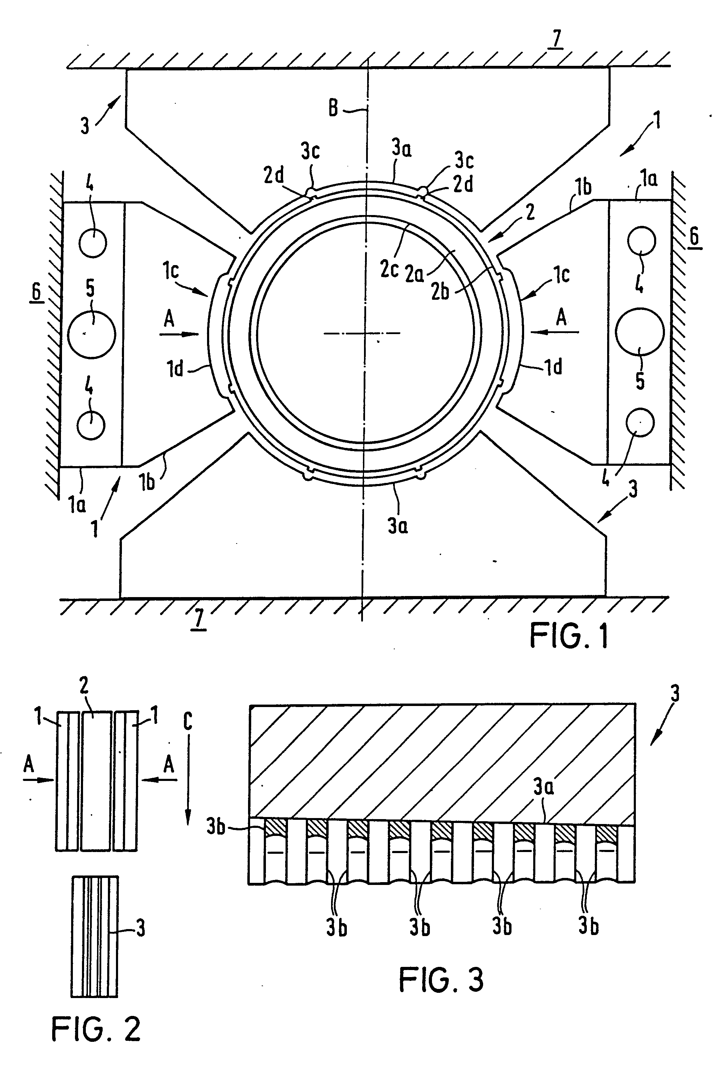

Figur 1 zeigt zwei diametral zueinander angeordnete Spannbakken 1 zum Einspannen des Rohres 2, auf die Zeichenebene der Figur 1 bezogen sind senkrecht zu den Spannbacken 1 diametral zueinander zwei Schneidbacken 3 zum Bearbeiten der Außenfläche des Rohres 2 vorgesehen.

Jeder Spannbacken 1 besteht aus einem Sockelelement 1a und einem Spannelement 1b, das Sockelelement 1a ist in Längsrichtung des Rohres 2 mittels zweier Führungsstangen 4 geführt und in dieser Richtung mittels einer Antriebsspindel 5 verfahrbar. Das Sockelelement 1a liegt an einer Führungswand 6 an, wodurch eine planparallele Führung des Sockelelementes 1 und damit des Spannbackens zum Rohr 2 gewährleistet ist. Über nicht näher dargestellte Verstelleinrichtungen ist das im Sockelelement 1a gelagerte Spannelement 1b in Richtung des Pfeiles A radial auf das Rohr 2 zu und von diesem weg bewegbar, so daß das Rohr 2 zwischen den gekrümmten Abschnitten 1c der Spannbacken 1 verspannt werden kann.

Jede Schneidbacke 3 ist fest mit einer Lagerwand 7 verbunden und weist gleichfalls im gekrümmten Abschnitt 3a eine Vielzahl hintereinander angeordneter Schneiden 3b auf, deren Innendurchmesser sich in Vorschubrichtung des Rohres 2 stetig verjüngt, wie es in der Figur 3 dargestellt ist. Die jeweiligen Schneiden 3b der Schneidbacken 3 sind mit Nuten 3c versehen, die symmetrisch zur Mittelachse B, die auch der Schnittführung in Figur 3 entspricht, angeordnet sind. Das Rohr 2 besteht aus einem metallischen Ringabschnitt 2a sowie einem dünnwandigen Rohraußenmantel 2b aus Kunststoff, ferner einem Rohrinnenmantel 2c. Beim Bewegen des Rohres 2 an den Schneidbacken 3 vorbei, tragen die gekrümmten Abschnitte 3a der Schneidbacken 3 den entsprechenden Bereich des Rohraußenmantels, der sich etwa über jeweils einen Viertelkreis erstreckt ab und es verbleiben aufgrund der in die Schneidbacken 3 eingebrachten Nuten 3c in Längsrichtung des Rohres Stege 2d auf der Rohraußenfläche. Die Spannbacken 1 sind im Bereich ihrer gekrümmten Abschnitte 1c mit sich über deren Länge erstreckenden Hinterschneidungen 1d versehen, die nach einem Drehen des Rohres 2 um 90° die Stege 2d des Rohres 2 aufnehmen und damit das Rohr 2 bei dessen erneuten Verspannen nicht im Bereich der Stege 2d zusammenpressen, wodurch eine unerwünschte Verformung der Stege verhindert wird, abgesehen hiervon bewirken die Hinterschneidungen 1d eine Fixierung des Rohres gegen Verdrehen.

Figur 2 verdeutlicht in einer schematischen Darstellung die Anordnung der Spannbacken 1 und der Schneidbacken 3. Die Spannbacken 1 fixieren das Rohr 2 in Richtung der Pfeile A, die Zustellbewegung des eingespannten Rohres 2 erfolgt in Richtung der Schneidbacken 3 gemäß Pfeil C.

Zum Bearbeiten eines Rohres wird dieses zunächst mittels der Spannbacken eingespannt und durch die Schneidbacken gezogen, anschließend aus der Spannvorrichtung wieder entnommen, die Spannbacken fahren dann in ihre Ausgangsstellung wieder zurück, in dieser wird das Rohr um 90° gedreht eingespannt, erneut durch die Schneidbakken gezogen, der Spannvorrichtung entnommen und abgelegt. Die Spannbacken fahren dann wieder in ihre Ausgangsstellung zurück und sind bereit, ein neues Rohr zu bearbeiten.

## Ansprüche

1. Verfahren zum Bearbeiten eines aus isolierendem Material, insbesondere Kunststoff bestehenden Außenmantels eines rohrförmigen Wicklungsträgers für ein Widerstandselement, **gekennzeichnet** durch folgende Merkmale:
Einspannen des Rohres in eine Spannvorrichtung,
Ziehen durch eine Schneidvorrichtung,
Drehen um die Längsachse und
Ziehen durch die Schneidvorrichtung.

2. Verfahren nach Anspruch 1, dadurch gekennzeichnet, daß das Rohr vor dem Drehen der Spannvorrichtung entnommen und diese in ihre Ausgangsstellung verfahren wird.

3. Verfahren nach Anspruch 1 oder 2, dadurch gekennzeichnet, daß die Schneidvorrichtung stationär angeordnet ist und das Rohr um 90° gedreht wird.

4. Vorrichtung zur Durchführung des Verfahrens nach einem der Ansprüche 1 bis 3, gekennzeichnet durch eine Spannvorrichtung mit diametral zueinander angeordneten Spannbacken (1) zur Aufnahme des Rohraußenmantels (2b) sowie eine Schneidvorrichtung mit diametral zueinander angeordneten und relativ zu den Spannbacken (1) in Längsrichtung des Rohres (2) verfahrbaren Schneidbacken (3).

5. Vorrichtung nach Anspruch 4, gekennzeichnet durch in der Ebene der Spannbacken (1) um 90° zu diesen gedreht angeordnete Schneidbacken (3).

6. Vorrichtung nach Anspruch 4 oder 5, dadurch gekennzeichnet, daß die Schneidbacken (3) in Längserstreckung des eingespannten Rohres (2) verlaufende Erhebungen und Vertiefungen (3c) aufweisen.

7. Vorrichtung nach Anspruch 6, dadurch gekennzeichnet, daß die Spannbacken (1) Hinterschneidungen (1d) zur Aufnahme der Erhebungen (2d) des Rohraußenmantels (2b) aufweisen.

8. Vorrichtung nach einem der Ansprüche 4 bis 7, dadurch gekennzeichnet, daß mehrere Schneidbackenpaare (3b) in Längsrichtung des Rohres (2) hintereinander angeordnet sind.

9. Vorrichtung nach einem der Ansprüche 4 bis 8, dadurch gekennzeichnet, daß die Spann- (1) und die Schneidvorrichtung (3) in einer gemeinsamen Halterung gelagert sind.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 308 753 (KALHAMMER) * Seite 6, Absatz 1; Seite 8, Absatz 1; Figur 1 * --- | 1,4 | H 01 C 17/04 B 23 D 79/12 // H 05 B 3/46 |
| A | DE-C- 687 083 (TELEFUNKEN) * Seite 2, Zeilen 5-7,46-56; Figur 2 * --- | 1 | |
| A | FR-A-2 441 986 (EICHENAUER) * Seite 4, Zeilen 8-12,38-40; Seite 5, Zeile 1; Figuren 1,2 * ----- | 1 | |

|  | RECHERCHIERTE SACHGEBIETE (Int. Cl.4) |
|---|---|
| | H 01 C B 23 D G 01 F H 05 B |

Der vorliegende Recherchenbericht wurde für alle Patentansprüche erstellt

| Recherchenort | Abschlußdatum der Recherche | Prüfer |
|---|---|---|
| DEN HAAG | 29-05-1989 | PUHL A.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument